# EUROPÄISCHE PATENTSCHRIFT

(11) **EP 0 385 059 B1**
(45) Veröffentlichungstag und Bekanntmachung des Hinweises auf die Patenterteilung: **19.05.1993**
(21) Anmeldenummer: 90100196.6
(22) Anmeldetag: 05.01.1990
(51) Int. Cl.: B23B 51/00

(54) **Bohrer**
Drill
Fôret

(30) Priorität: 27.02.1989 DE 3906036; 04.03.1989 DE 3907088
(43) Veröffentlichungstag der Anmeldung: 05.09.1990
(73) Patentinhaber: fischerwerke Artur Fischer GmbH & Co. KG, D-72178 Waldachtal (DE)
(72) Erfinder: Fischer, Artur, Prof. Dr. h. c., D-7244 Waldachtal/Tumlingen 3 (DE); Haug, Willi, D-7290 Freudenstadt (DE)
(74) Vertreter: Ott, Elmar, Dipl.-Ing.

(56) Entgegenhaltungen:
- DE-A- 2 603 431
- DE-B- 2 547 412
- DE-U- 8 515 960
- DE-U- 8 808 256

## Beschreibung

Die Erfindung betrifft einen Bohrer gemäß der Gattung des Anspruches 1.

Zur Herstellung von Bohrlöchern, deren Bohrlochtiefe genau eingehalten werden soll, werden Bohrer mit am Bohrschaft angeordnetem Tiefenanschlag verwendet. Aus der DE-U-85 15 960 ist ein Bohrer mit einem fest am Bohrschaft angeordneten Tiefenanschlag bekannt, wobei der Tiefenanschlag als Dämpfungselement ausgebildet ist. Bei Verwendung dieses Bohrers für harte Baustoffe und in Verbindung mit einem Bohrhammer werden bei Erreichen der eingestellten Bohrlochtiefe zur Vermeidung einer Beschädigung der Bauteiloberfläche die vom Bohrhammer ausgehenden Schlagstöße gedämpft. Durch die starre und mitdrehende Verbindung des Anschlages mit dem Bohrschaft ist jedoch eine längere Berührung des Anschlages mit der Bauteiloberfläche zur Verhinderung eines Abriebes des gummiartigen Anschlages zu vermeiden. Abgesehen von der fehlenden Einrichtung zur Herstellung eines hinterschnittenen Bohrloches wäre somit auch der Anschlag des bekannten Bohrers für das Ausreiben der Hinterschneidung nicht geeignet.

Aus der DE-U-88 08 256 ist ein Werkzeug bekannt, mit dem in einem vorgebohrten zylindrischen Bohrloch nachträglich in einem zweiten Arbeitsgang eine Hinterschneidung ausreibbar ist. Zur Herstellung der Hinterschneidung weist der Bohrschaft des Werkzeuges eine Ausbuchtung auf, deren größter Durchmesser dem Durchmesser des zylindrischen Teils des Bohrloches entspricht. Damit bildet die Ausbuchtung in Verbindung mit der Bohrlochwandung ein Schwenklager, das durch Taumeln das Ausreiben der Hinterschneidung ermöglicht. Für das Ausreiben muß eine Bohrmaschine ausschließlich im Drehgang verwendet werden. Als Tiefenanschlag zur Positionierung der Hinterschneidung im Bohrloch wird ein mit dem Ausreibwerkzeug fest verbundenes Stahlteil verwendet, dessen Stirnseite zur Ermöglichung der Schwenkbewegung leicht ballig ausgebildet ist. Bei dieser Lösung ist zwar ein Abrieb des Anschlages weitgehendst vermieden, allerdings handelt es sich hierbei um ein reines Ausreibgerät, das nicht zur Herstellung eines Bohrloches mit Hinterschneidung in einem Arbeitsgang geeignet ist.

Ein derartiges Bohrwerkzeug ist aus der DE-B-25 47 412 bekannt. Diese Druckschrift zeigt eine Bohrvorrichtung mit einem lose über einen Bund des Bohrschaftes übergestülpten Tiefenanschlag. Der Tiefenanschlag dient sowohl zur Begrenzung der Bohrlochtiefe als auch als Schwenklager für das Ausschwenken des Bohrers. Zu diesem Zweck weist der Tiefenanschlag eine konkav geformte Gelenkpfanne auf, in der der am Bohrschaft festgesetzte Anschlagbund mit konvexer Stirnfläche zur Verschwenkung des Bohrers abgestützt ist. Durch das außerhalb des Bohrloches befindliche Schwenklager ergeben sich jedoch ungünstige Hebelverhältnisse und unzureichende Abstützmöglichkeiten im Schwenklager, die ein Ausreiben einer Hinterschneidung in harten Baustoffen erschweren oder gar unmöglich machen. Außerdem ist die Art des Schwenklagers bei dem bekannten Bohrer nicht geeignet, die von einem Bohrhammer ausgehenden Schläge unbeschadet aufzunehmen. Die Bohrvorrichtung ist daher ausschließlich für die Verwendung in weichen Materialien, beispielsweise Gasbeton, und in Verbindung mit einer im Drehgang arbeitenden Bohrmaschine vorgesehen.

Der Erfindung liegt die Aufgabe zugrunde, einen Bohrer zu schaffen, mit dem in einem Arbeitsgang ein Bohrloch mit Hinterschneidung auch in harten Baustoffen unter Vermeidung von Beschädigungen der Bauteiloberfläche oder des Werkzeuges herstellbar ist.

Die Lösung dieser Aufgabe wird durch die im Anspruch 1 angegebenen Merkmale erreicht. Durch die zwischen dem Bohrkopf und dem Tiefenanschlag angeordnete Ausbuchtung am Bohrschaft wird in Verbindung mit der Bohrlochwandung das Schwenklager gebildet, das aufgrund der günstigen Hebelverhältnisse, Verstärkung des Bohrschaftes und einer stabilen Abstützung die Erzeugung hoher Radialkräfte zur Ausreibung der Hinterschneidung in harten Baustoffen ermöglicht. Da ferner der Tiefenanschlag ein elastisches, ringförmiges Dämpfungselement aufweist, werden Beschädigungen der Wandoberfläche im Bereich der Bohrlochöffnung sowie des Bohrwerkzeuges vermieden. Durch das nur lose über den Bund am Bohrschaft übergestülpte Dämpfungselement wird sowohl die Schwenkbewegung des Bohrers ermöglicht als auch ein Mitdrehen des Dämpfungselementes beim Ausreiben der Hinterschneidung vermieden.

Das vorzugsweise aus Polyuretan oder einem entsprechenden Kunststoff bestehende Dämpfungselement weist eine hinreichende Elastizität auf, damit der Tiefenanschlag während der Schwenkbewegung des Bohrers bei der Erstellung der Hinterschneidung des Bohrloches vollflächig an der Wandoberfläche aufliegt. Bei der Schwenkbewegung wird zwar das Dämpfungselement entsprechend der Schwenkbewegung wechselweise elastisch deformiert, jedoch ändert dadurch die an der Wandoberfläche anliegende Anlagefläche des Tiefenanschlags ihre Position nicht. Das Dämpfungselement hat somit nicht nur den Vorteil, daß die Wandoberlfäche nicht beschädigt wird, sondern auch, daß für das Ausreiben der Hinterschneidung eine optimale Anlage des Tiefenanschlags an der Wandoberfläche erhalten bleibt.

Zwischen dem Dämpfungselement und dem am Bohrschaft angeformten Bund befindet sich eine Lagerscheibe, die die Reibung zwischen dem sich drehenden Bund und dem sich bei Anlage an der Wandoberfläche nicht mitdrehenden Dämpfungselement erheblich verringert. Die Lagerscheibe kann als Metallscheibe ausgebildet sein oder aus einem Kunststoff mit guten Gleiteigenschaften bestehen.

Das Dämpfungselement kann gegen eine axiale Verschiebung am Schaft durch ein den am Bohrschaft ausgebildeten Bund übergreifendes Gehäuse gesichert sein. Dabei kann das Gehäuse auch das Dämpfungselement vollständig umgreifen oder an der zylindrischen Seitenwand des Dämpfungselements eingreifen, damit der untere Bereich des Dämpfungselements, der die Anlagefläche des Tiefenanschlags darstellt, frei in Richtung Bohrkopf absteht. Die letztgenannte Ausführungsform besitzt eine weiche Anlagefläche wie bei der Ausführung ohne übergreifendes Gehäuse, wodurch die jeweilige Wandoberfläche besonders geschont wird.

Eine Weiterbildung der Erfindung sieht vor, daß der Tiefenanschlag ein elastisches, topfförmiges Dämpfungselement aufweist, welches mit seiner Seitenwand einen am Bohrschaft ausgebildeten Bund übergreift und einen Boden mit Durchgangsöffnung hat, durch die der vom Bund zum Bohrkopf führende Bohrschaft hindurchgreift. Das Dämpfungselement läßt sich auf einfache Weise über den Bohrkopf bis zu dem Bund über den Bohrschaft schieben, wobei mit etwas Druck die den Bund übergreifende Seitenwand des Dämpfungselements über den Bund geschoben wird. Das Dämpfungselement kann ebenfalls aus einem ealstischen Kunststoff, beispielsweise aus Polyuretan, als einstückiges Teil gefertigt sein.

Um Reibungsverluste zwischen Bund und dem Boden des Dämpfungselements zu verringern bzw. zu vermeiden, kann auf den Bohrschaft eine Lagerscheibe aufgeschoben sein, die zwischen Bund und Boden innerhalb des vom Dämpfungselement umschlossenen Raum angeordnet ist.

Die Erfindung wird nachfolgend anhand der Zeichnung näher erläutert. Es zeigen:
- Figur 1: ein erstes Ausführungsbeispiel eines Bohrers mit Dämpfungselement,
- Figur 2: ein zweites Ausführungsbeispiel mit einem das Dämpfungselement übergreifenden Gehäuse,
- Figur 3: ein weiteres, teilweise dargestelltes Ausführungsbeispiel eines Bohrers mit seitlich am Dämpfungselement angreifendem Gehäuse und
- Figur 4: ein weiteres Ausführungsbeispiel eines Bohrers mit einem als elastisches, topfförmiges Dämpfungselement ausgebildeten Tiefenanschlag.

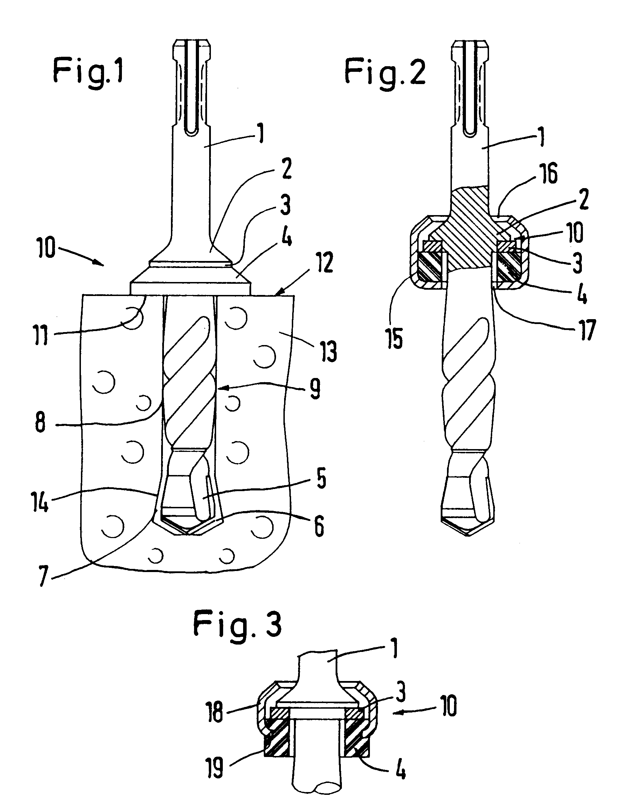

Der in Figur 1 dargestellte Bohrer 1 hat einen am Bohrschaft angeformten Bund 2, an dem eine Lagerscheibe 3 anliegt. Unterhalb der Lagerscheibe 3 ist ein Dämpfungselement 4 angeordnet, welches eine aus elastischem Kunststoff bestehende Scheibe ist.

Der Bohrer 1 besitzt einen Bohrkopf 5 mit seitlich am Bohrschaft überstehenden Seitenschneiden 6, 7, die in an sich bekannter Weise zur Herstellung einer Hinterschneidung am Bohrlochgrund eines Bohrlochs dienen. Der Bohrschaft besitzt eine Ausbuchtung 8, die innerhalb des Bohrlochs bei Ausreiben der Hinterschneidung den Schwenkpunkt definiert. Der Bohrer 1 liegt dabei mit der breitesten Stelle 9 der Ausbuchtung 8 an der Bohrlochwand an und läßt sich um diesen Schwenkpunkt seitlich verschwenken.

Der Bund 2, die Lagerscheibe 3 und das Dämpfungselement 4 bilden zusammen einen Tiefenanschlag 10, der die maximale Eindringtiefe des Bohrers 1 in ein Mauerwerk definiert. Sobald das Dämpfungselement 4 mit seiner Anlagefläche 11 an der Wandoberfläche 12 des Mauerwerks 13 anliegt, kann der Bohrer 1, der in einer hier nicht dargestellten Schlagbohrmaschine eingespannt ist, seitlich verschwenkt werden, um die Hinterschneidung 14 am Bohrlochgrund auszureiben. Durch die Schwenkbewegung wird der Bund 2 entsprechend abwechselnd seitlich geneigt, wobei das Dämpfungselement 4 geringfügig elastisch deformiert wird. Mit seiner Anlagefläche 11 liegt das Dämpfungselement 4 dabei vollflächig an der Wandoberfläche 12 an.

Der in Figur 2 dargestellte Bohrer 1 besitzt einen Tiefenanschlag 10, der aus einem Bund 2, einer Lagerscheibe 3, einem Dämpfungselement 4 und einem das Dämpfungselement 4 und den Bund 2 übergreifenden Gehäuse 15 besteht. Das Gehäuse 15 hat eine obere Durchgangsöffnung 16 und eine untere Durchgangsöffnung 17 und ist im übrigen allseitig geschlossen.

In Figur 3 besitzt der Tiefenanschlag 10 ebenfalls ein Gehäuse 18, dessen unterer Rand 19 nach innen abgewinkelt ist und seitlich an der zylindrischen Seitenwand des Dämpfungselements 4 eingreift.

Die Lagerscheibe 3 ist eine Metallscheibe, wobei jedoch auch eine Kunststoffscheibe aus einem Kunststoff mit guten Gleiteigenschaften Verwendung finden kann.

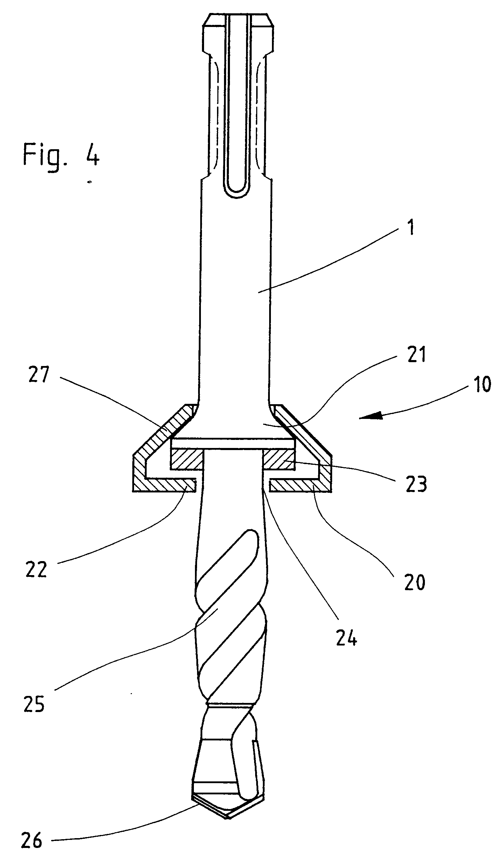

Der aus Figur 4 ersichtliche Bohrer 4 besitzt als Tiefenanschlag 10 ein elastisches, topfförmiges Dämpfungselement 20 und einen am Bohrschaft angeformten Bund 21. Im Zwischenraum zwischen dem Boden 22 des Dämpfungselements 20 und dem Bund 21 befindet sich eine Lagerscheibe 23, die aus Metall oder einem Kunststoff mit guten Gleiteigenschaften bestehen kann. Das Dämpfungselement 20 ist aus einem elastischen Kunststoff als einstückiges, in etwa kegelstumpfförmiges Teil gefertigt.

Das Dämpfungselement 20 hat am Boden 22 eine Durchgangsöffnung 24, durch die der Bohrschaft mit Bohrmehlnuten 25 und dem Bohrkopf 26 nach unten herausragt. Die Seitenwand 27 verjüngt sich nach oben ebenso wie die Umfangsfläche des Bundes 21. Die konische Umfangsfläche des Bundes 21 besitzt die gleiche Neigung wie die konische Innenfläche der Seitenwand 27 des Dämpfungselements 20.

Der dargestellte Bohrer 1 läßt sich mit seinem oberen Schaftteil in eine hier nicht dargestellte Schlagbohrmaschine oder dergleichen einspannen. Die von der Schlagbohrmaschine auf den Bohrschaft übertragenden Schläge werden bei Anliegen des Dämpfungselements 20 an einer Wandoberfläche so stark gedämpft, daß eine Beschädigung der Wandoberfläche im Bereich der Bohrlochmündung sicher vermieden wird.

## Patentansprüche

1. Bohrer zur Herstellung von Bohrlöchern mit Hinterschneidung in einem Mauerwerk, dessen Bohrkopf seitlich am Bohrschaft überstehende Seitenschneiden und einen am Bohrschaft ausgebildeten Bund aufweist, über den ein Tiefenanschlag frei drehbar übergestülpt ist, **dadurch gekennzeichnet,** daß am Bohrschaft zwischen dem Bohrkopf (5) und dem Tiefenanschlag (10) eine Ausbuchtung (8) zur Bildung eines Schwenklagers ausgebildet ist, wobei der Tiefenanschlag (10) ein elastisches, ringförmiges Dämpfungselement (4) aufweist, welches an einer Lagerscheibe (3) anliegt, die sich an dem am Bohrschaft ausgebildeten Bund (2) abstützt.

2. Bohrer nach Anspruch 1, **dadurch gekennzeichnet,** daß an dem Dämpfungselement (4) ein den Bund (2) übergreifendes Gehäuse (15, 18) anschließt.

3. Bohrer nach Anspruch 2, **dadurch gekennzeichnet,** daß das Gehäuse (15) das Dämpfungselement (4) und den Bund (2) umschließt.

4. Bohrer nach Anspruch 2, **dadurch gekennzeichnet,** daß das Gehäuse (18) seitlich am Dämpfungselement (4) eingreift, so daß der untere, in Richtung Bohrkopf (5) ausgerichtete Teil des Dämpfungselementes (4) frei am Gehäuse (18) absteht.

5. Bohrer nach Anspruch 1, **dadurch gekennzeichnet,** daß der Tiefenanschlag (10) ein elastisches, topfförmiges Dämpfungselement (20) aufweist, welches mit seiner Seitenwand (27) einen am Bohrschaft ausgebildeten Bund (21) übergreift und einen Boden (22) mit Durchgangsöffnung (24) hat, durch die der vom Bund (21) zum Bohrkopf (26) führende Bohrschaft hindurchgreift.

6. Bohrer nach Anspruch 5, **dadurch gekennzeichnet,** daß das Dämpfungselement (20) die Kontur eines Kegelstumpfes hat.

7. Bohrer nach einem der Ansprüche 5 oder 6, **dadurch gekennzeichnet,** daß die Innenwand des Dämpfungselementes (20) und die Form des Bundes (21) konische Umfangsflächen haben.

8. Bohrer nach Anspruch 7, **dadurch gekennzeichnet,** daß die Lagerscheibe (23) zwischen Boden (22) des Dämpfungselementes (20) und dem Bund (21) gelagert ist.

## Claims

1. A drill bit for producing drilled holes with an undercut in masonry, the drill tip of which has lateral cutting edges projecting laterally beyond the shank and a collar formed on the drill shank, over which a depth stop engages to as to be freely rotatable, characterized in that on the drill shank between the drill tip (5) and the depth stop (10) there is formed a bulge (8) to create a pivot bearing, the depth stop (10) comprising a resilient, ring-shaped shock-absorbing element (4) which lies against a bearing washer (3) that bears against the collar (2) formed on the drill shank.

2. A drill bit according to Claim 1, characterized in that a casing (15, 18) engaging over the collar (2) adjoins the shock-absorbing element (4).

3. A drill bit according to claim 2, characterized in that the casing (15) encloses the shock-absorbing element (4) and the collar (2).

4. A drill bit according to claim 2, characterized in that the casing (18) engages the shock-absorbing element (4) laterally so that the lower part of the shock-absorbing element (4) directed in the direction of the drill tip (5) projects free of the casing (18).

5. A drill bit according to claim 1, characterized in that the depth stop (10) comprises a resilient, cup-shaped shock-absorbing element (20) which, with its side wall (27) engages over a collar (21) formed on the drill shank and has a base (22) with a through-opening (24) through which the drill shank leading from the collar (21) to the drill tip (26) passes.

6. A drill bit according to claim 5, characterized in that the shock-absorbing element (20) has the contour of a truncated cone.

7. A drill bit according to one of claims 5 or 6, characterized in that the inner wall of the shock-absorbing element (20) and the shape of the collar (21) have conical peripheral faces.

8. A drill bit according to claim 7, characterized in that the bearing washer (23) is mounted between the base (22) of the shock-absorbing element (20) and the collar (21).

## Revendications

1. Foret pour percer des trous pourvus d'une contre-dépouille ou élargissement intérieur dans une maçonnerie, foret dont la tête présente des arêtes latérales faisant latéralement saillie de la tige du foret, de même qu'un collet forme sur cette tige et sur lequel une butée de profondeur est enfilée de manière qu'elle puisse tourner librement, caractérisé en ce qu'un bombement (8) pour la création d'un palier d'inclinaison est formé sur la tige du foret entre la tête (5) du foret et la butée de profondeur (10), laquelle butée comporte un élément d'amortissement élastique (4) de forme annulaire, qui est appliqué contre un disque-palier (3) s'appuyant au collet (2) formé sur la tige du foret.

2. Foret selon la revendication 1, caractérisé en ce qu'un boîtier (15, 18) coiffant le collet (2) se raccorde à l'élément d'amortissement (4).

3. Foret selon la revendication 2, caractérisé en ce qu'un boîtier (15) entoure l'élément d'amortissement (4) et le collet (2).

4. Foret selon la revendication 2, caractérisé en ce que le boîtier (18) pénètre latéralement dans l'élément d'amortissement (4), de sorte que la partie inférieure de l'élément d'amortissement (4), partie qui est dirigée vers la tête (5) du foret, dépasse librement du boîtier (18).

5. Foret selon la revendication 1, caractérisé en ce que la butée de profondeur (10) comporte un élément d'amortissement élastique (20) en forme de pot, qui recouvre par sa paroi latérale (27) un collet (21) formé sur la tige du foret et possède un fond (22) pourvu d'un orifice de passage (24) traversé par la partie de la tige du foret s'étendant du collet (21) vers la tête (26) du foret.

6. Foret selon la revendication 5, caractérisé en ce que l'élément d'amortissement (20) a le profil d'un cône tronqué.

7. Foret selon la revendication 5 ou 6, caractérisé en ce que la paroi latérale interne de l'élément d'amortissement (20) et la surface périphérique du collet (21) ont une forme conique.

8. Foret selon la revendication 7, caractérisé en ce que le disque-palier (23) est logé entre le fond (22) de l'élément d'amortissement (20) et le collet (21).
